# EUROPEAN PATENT SPECIFICATION

(11) **EP 2 743 143 B1**
(45) Date of publication and mention of the grant of the patent: **30.09.2015**
(21) Application number: 12822758.4
(22) Date of filing: 22.05.2012
(51) Int. Cl.: B60R 21/015, B60R 21/205

(54) **VEHICLE OCCUPANT DETECTION DEVICE**
VORRICHTUNG ZUR ERKENNUNG VON FAHRZEUGINSASSEN
DISPOSITIF DE DÉTECTION DE PASSAGER DE VÉHICULE

(30) Priority: 10.08.2011 JP 2011174808
(43) Date of publication of application: 18.06.2014
(73) Proprietor: Honda Motor Co., Ltd., Minato-ku Tokyo 107-8556 (JP)
(72) Inventor: KOIKE Toshihiro, Wako-shi Saitama 351-0193 (JP)
(74) Representative: Weickmann & Weickmann
(86) International application number: PCT/JP2012/063042
(87) International publication number: WO 2013/021707

(56) References cited:
- JP-A- 2003 289 528
- JP-A- 2007 253 748
- JP-A- 2007 253 748
- JP-A- 2007 276 577

## Description

### Technical Field

The present invention relates to a vehicle occupant detecting apparatus (vehicle occupant detection device) for capturing an image representing the behavior of a vehicle occupant, who is seated on a seat in a vehicle, by an image capturing unit, and detecting the position of a specific region of the vehicle occupant.

### Background Art

Heretofore, there has been proposed a vehicle occupant detecting system for judging whether or not a vehicle occupant is present in a vehicle, by capturing an image of the vehicle occupant using a camera that is placed in the cabin of the vehicle, and detecting the head or the like of the vehicle occupant from the captured image.

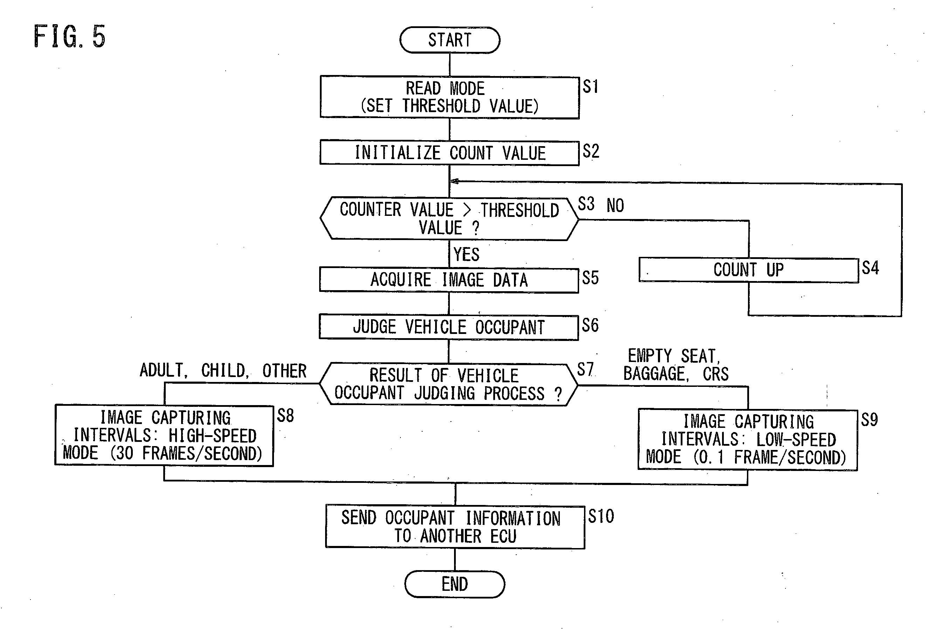

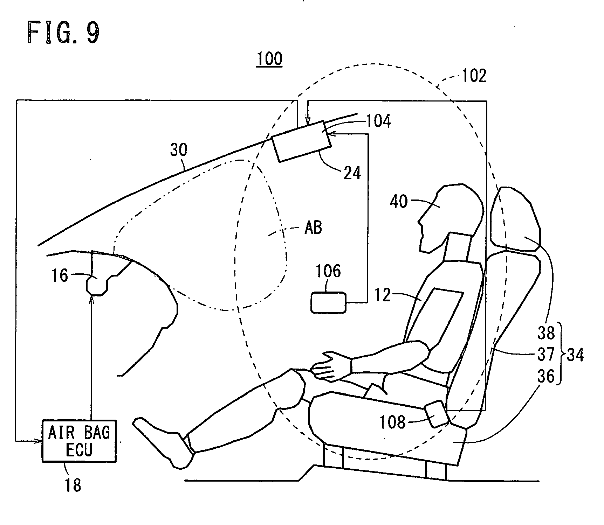

For example, a vehicle occupant detecting system, as disclosed in Japanese Laid-Open Patent Publication No. 2004-144512, proposes a technology for intermittently capturing images by emitting infrared radiation from an infrared LED (Light Emitting Diode) in synchronism with the exposure timing of a camera (see FIG. 5, paragraph [0038] of the document). According to another embodiment, the publication also discloses that light emission timings of a plurality of infrared LEDs are successively switched, so as to emit infrared radiation alternatively from the infrared LEDs, thereby reducing the electric power consumption of the infrared LEDs and preventing the durability of the infrared LEDs from being reduced (see FIG. 9, paragraph [0060] of the document).

### Summary of Invention

SRSs (Supplemental Restraint Systems), which are incorporated in vehicles, typically limit the objects to be restrained (protected) primarily to human beings as vehicle occupants. While the vehicle is traveling, although a vehicle occupant (driver) necessarily is present on the driver's seat, it depends on various circumstances whether or not vehicle occupants are present on other seats apart from the driver's seat. If a vehicle occupant to be detected is not present on a front passenger's seat, then it makes no sense to instantaneously acquire a highly accurate image in the vicinity of the front passenger's seat.

However, essentially, the vehicle occupant detecting system disclosed in Japanese Laid-Open Patent Publication No. 2004-144512 is required to sequentially perform an unnecessary processing sequence, because the vehicle occupant detecting system must continuously capture images at relatively short imaging intervals. In other words, the technology described above has not proven sufficiently effective and has room for improvement.

The present invention has been made in order to solve the aforementioned problems. It is an object of the present invention to provide a vehicle occupant detecting apparatus, which is capable of further reducing electric power consumption and further reducing deterioration of components of an image capturing unit.

According to the present invention, there is provided a vehicle occupant detecting apparatus comprising an image capturing unit disposed in a cabin of a vehicle, for sequentially outputting images, which are captured at predetermined image capturing intervals, of a predetermined area including a seat in the cabin of the vehicle, a judging unit for judging whether or not a vehicle occupant is present on the seat in the predetermined area, and a vehicle occupant state detecting unit for detecting a state of the vehicle occupant based on the images output from the image capturing unit, the vehicle occupant detecting apparatus further comprising a control unit for controlling the image capturing intervals depending on a judged result from the judging unit. The control unit controls the image capturing unit to capture the images in a high-speed mode, in which the image capturing intervals are relatively short, if the judging unit judges that the vehicle occupant is present, and controls the image capturing unit to capture the images in a low-speed mode, in which the image capturing intervals are relatively long, if the judging unit judges that the vehicle occupant is not present.

According to the present invention, if it is judged that a vehicle occupant is not present on the seat, then an image is captured in the low-speed mode, an image capturing interval of which is relatively longer than if it is judged that a vehicle occupant is present on the seat. Considering the control property, in light of the fact that there is no need to detect the state of a vehicle occupant highly accurately and instantaneously if a vehicle occupant does not reside within the image capturing range of the image capturing unit, it is possible to reduce the total number of images captured within the operation time of the vehicle occupant detecting apparatus. Such a control property is effective to reduce electric power consumption as well as to reduce deterioration of components that make up the image capturing unit.

Preferably, the judging unit judges whether or not the vehicle occupant is present according to a pattern matching process on the images output from the image capturing unit, and judges that the vehicle occupant is not present if a shape representing any one of an empty seat, a child seat, and baggage having a predetermined shape is detected by the pattern matching process. With this arrangement, it is not necessary to provide another type of detecting device, e.g., a seat weight sensor or the like, for judging whether or not a vehicle occupant is present. Therefore, the manufacturing cost of the vehicle occupant detecting apparatus can be prevented from increasing, and it is possible to judge the presence of a vehicle occupant highly accurately. The image capturing unit can be controlled appropriately because a vehicle occupant is judged as not being present if a shape representing any one of an empty seat, a child seat, and baggage is detected.

Preferably, the judging unit judges that the vehicle occupant is not present if the vehicle occupant is not detected at a plurality of successive times in the images, which are output sequentially from the image capturing unit. Consequently, detection accuracy is increased in reliability when a vehicle occupant is judged as not being present using an image.

Preferably, the vehicle occupant detecting apparatus further comprises an air bag device for inflating an air bag when the vehicle collides with an obstacle, wherein the predetermined area is established such that the one image capturing unit can capture an image of all of the seats disposed in the cabin of the vehicle, the judging unit judges whether or not the vehicle occupant is present on a front passenger's seat from among all of the seats, images of which are captured by the image capturing unit, the vehicle occupant state detecting unit detects the position of a head of the vehicle occupant as the state of the vehicle occupant, and the control unit controls the image capturing intervals depending on whether or not the vehicle occupant is present on the front passenger's seat, as judged by the judging unit, and controls whether or not the air bag should be inflated or the extent to which the air bag should be inflated, based on the position of the head that is detected by the vehicle occupant state detecting unit. When the air bag device is controlled to initiate air bag inflation, it is highly necessary to detect the state of the vehicle occupant on the front passenger's seat, and in particular, to detect the position of the head of the vehicle occupant with highest accuracy. If the image capturing intervals are controlled depending on the presence or absence of a vehicle occupant on the front passenger's seat, then the vehicle occupant can appropriately be detected with a minimum required arrangement.

Preferably, the image capturing unit is associated with each of the seats, the judging unit judges whether or not the vehicle occupant is present on each of the seats based on the images output from the image capturing unit, and the control unit controls the image capturing intervals for each of the image capturing units based on whether or not the vehicle occupant is present on each of the seats, as judged by the judging unit. The image capturing unit, which are provided for each of the seats, is capable of detecting the state of a vehicle occupant on the seat highly accurately, irrespective of the angle at which the image capturing unit are installed and the angle of field of the image capturing unit. Accordingly, by controlling the image capturing intervals depending on whether or not a vehicle occupant is present on each of the seats, electric power consumption and deterioration of components can be minimized.

Preferably, the vehicle occupant detecting apparatus further comprises a door opening/closing detecting unit for detecting whether a door of the vehicle is opened or closed, and a seat belt fastening/unfastening detecting unit for detecting whether a seat belt of the seat is fastened or unfastened. The control unit changes from the low-speed mode to the high-speed mode for the image capturing unit to capture the images if the door opening/closing detecting unit detects that the door is opened or closed, or if the seat belt fastening/unfastening detecting unit detects that the seat belt is fastened or unfastened, in the low-speed mode. In this manner, when the door is detected as being opened or closed and the seat belt is detected as being fastened or unfastened, it is assumed that a vehicle occupant is getting on or getting off from the vehicle, so that the state of the vehicle occupant can be detected at appropriate times.

Preferably, the vehicle occupant detecting apparatus further comprises a judgeability determining unit for determining whether or not the judging unit is capable of judging the presence of the vehicle occupant, wherein the control unit controls the image capturing unit to capture the images in the high-speed mode if the judgeability determining unit determines that the judging unit is incapable of judging the presence of the vehicle occupant. If the presence of a vehicle occupant cannot be judged using images due to lack of sufficient exposure to infrared radiation, or due to electric noise or the like, then the high-speed mode is selected, so that subsequent changes in the state of the vehicle occupant can be handled quickly.

Preferably, the vehicle occupant detecting apparatus further comprises a lighting unit for emitting light toward the predetermined area, wherein the lighting unit emits light in synchronism with the image capturing intervals controlled by the control unit. Thus, electric power consumption of not only the image capturing unit but also the lighting unit can be reduced, and deterioration of components can be reduced. Furthermore, it is possible to capture images in a more stable manner.

Preferably, the vehicle occupant detecting apparatus further comprises a calculating unit for calculating one of a brightness of the images output from the image capturing unit and an illuminance in the cabin of the vehicle. The control unit is capable of controlling at least one of an exposure time of the image capturing unit, whether or not the lighting unit is capable of emitting light, and a light emission time of the lighting unit, and shortens the exposure time of the image capturing unit, shortens the light emission time of the lighting unit, or inhibits the lighting unit from emitting light if the brightness or the illuminance calculated by the calculating unit is equal to or greater than a predetermined value. Thus, the exposure time of the image capturing unit, whether or not the lighting unit is capable of emitting light, and the light emission time of the lighting unit are controlled appropriately depending on the brightness or the illuminance. Therefore, electric power consumption and deterioration of components can be minimized.

With the vehicle occupant detecting apparatus according to the present invention, if it is judged that a vehicle occupant is not present on the seat, then an image is captured in the low-speed mode, an image capturing interval of which is relatively longer than if it is judged that a vehicle occupant is present on the seat. Considering the control property, in light of the fact that there is no need to detect the state of a vehicle occupant highly accurately and instantaneously if a vehicle occupant does not reside within the image capturing range of the image capturing unit, it is possible to reduce the total number of images captured within the operation time of the vehicle occupant detecting apparatus. Such a control property is effective to reduce electric power consumption as well as to reduce deterioration of components that make up the image capturing unit.

### Brief Description of Drawings

FIG. 1 is a schematic view of an air bag system incorporating a vehicle occupant detecting apparatus according to a first embodiment of the present invention;
FIG. 2 is a front elevational view of a camera unit shown in FIG. 1;
FIG. 3 is an electric block diagram of the camera unit shown in FIG. 1;
FIG. 4 is a functional block diagram of a CPU and peripheral components shown in FIG. 3;
FIG. 5 is a flowchart of an operation sequence of the vehicle occupant detecting apparatus shown in FIG. 1;
FIG. 6A is a view showing image data for judging "empty seat";
FIG. 6B is a view showing image data for judging "adult" or "child";
FIG. 7A is a view showing image data for judging "CRS";
FIG. 7B is a view showing image data for judging "baggage";
FIG. 8 is a timing chart of an operation sequence of the vehicle occupant detecting apparatus while a vehicle occupant, who has been seated on a given seat, is in the process of vacating the seat;
FIG. 9 is a schematic view of an air bag system incorporating a vehicle occupant detecting apparatus according to a second embodiment of the present invention;
FIG. 10 is a front elevational view of a camera unit shown in FIG. 9;
FIG. 11 is an electric block diagram of the camera unit shown in FIG. 9;
FIG. 12 is a functional block diagram of a CPU and peripheral components shown in FIG. 11;
FIG. 13 is a state transition diagram with respect to an image capturing process carried out by the vehicle occupant detecting apparatus shown in FIG. 9;
FIG. 14 is a flowchart of an operation sequence of the vehicle occupant detecting apparatus when respective image capturing modes are entered into; and
FIG. 15 is a timing chart of an operation sequence of the vehicle occupant detecting apparatus during travelling of the vehicle.

### Description of Embodiments

A vehicle occupant detecting apparatus according to preferred embodiments of the present invention, in relation to air bag systems in which the vehicle occupant detecting apparatus is incorporated, will be described below with reference to the accompanying drawings.

### [First Embodiment]

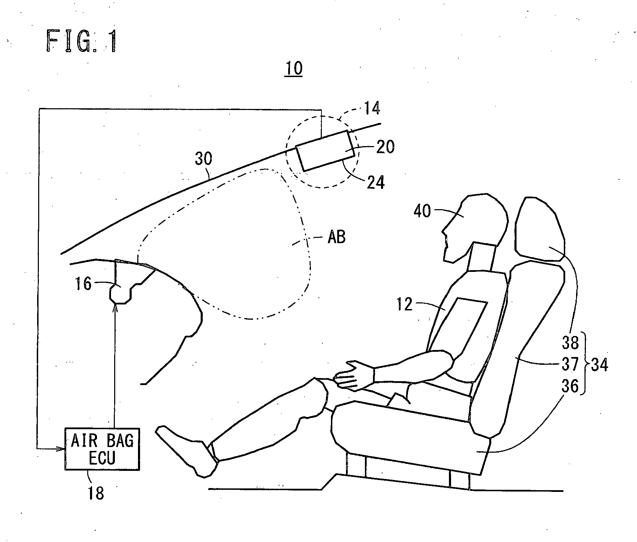

FIG. 1 is a schematic view of an air bag system 10 incorporating a vehicle occupant detecting apparatus according to a first embodiment of the present invention.

The air bag system 10 basically includes a vehicle occupant detecting apparatus 14 for detecting the state of a vehicle occupant 12 (within a given area) of the cabin of a vehicle, an air bag and inflator assembly 16 (air bag device) including an air bag AB that is inflated to protect the vehicle occupant 12 when the vehicle collides with an obstacle, and an air bag ECU (Electronic Control Unit) 18 for controlling the air bag and inflator assembly 16 in response to a control signal from the vehicle occupant detecting apparatus 14.

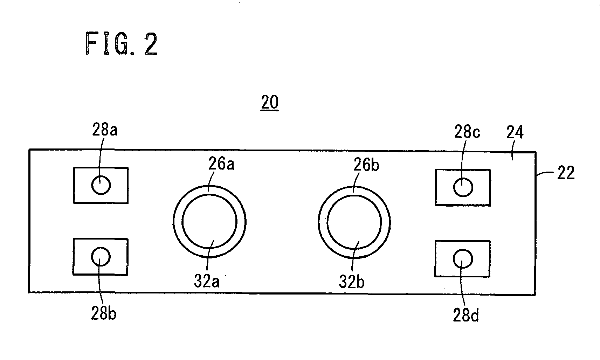

The vehicle occupant detecting apparatus 14 comprises a camera unit 20. As shown in FIG. 2, the camera unit 20 has a substantially rectangular casing 22, which supports a pair of cameras 26a, 26b (image capturing unit) and four infrared LEDs 28a, 28b, 28c, 28d (lighting units) on a surface 24 thereof.

The cameras 26a, 26b are cameras comprising CCDs (Charge Coupled Devices), which have a spectral sensitivity sufficient for capturing images in a wavelength range from visible light to near-infrared radiation, i.e., a wavelength range from 700 to 1000 nm. The cameras 26a, 26b may comprise other types of solid-state image capturing devices, such as CMOS (Complementary Metal Oxide Semiconductor) devices. Instead of the infrared LEDs 28a through 28d, the camera unit 20 may employ a light source having a different spectral distribution.

In FIG. 1, the camera unit 20 is disposed on an upper central area of a front windshield 30. The cameras 26a, 26b include respective image capturing surfaces 32a, 32b, which are directed toward a seat 34 (including a seat bottom 36, a backrest 37, and a headrest 38) disposed in the cabin of the vehicle. More specifically, when the vehicle occupant 12 is seated on the seat 34, a portion (including the head 40) of the vehicle occupant 12 resides within the image capturing range of each of the cameras 26a, 26b. Similarly, the infrared LEDs 28a through 28d are directed toward the seat 34. The infrared LEDs 28a through 28d function as an auxiliary light source during capturing of images by the cameras 26a, 26b.

At least one camera unit 20 is disposed in the cabin of the vehicle. If only one camera unit 20 is disposed in the cabin of the vehicle, then the camera unit 20 is positioned so as to look down on the cabin in its entirety, or more specifically, an image capturing range of the camera unit 20 is set to capture images of all of the seats 34 disposed in the cabin of the vehicle. Alternatively, a camera unit 20 (or a single image capturing unit) may be installed respectively for each of the seats 34.

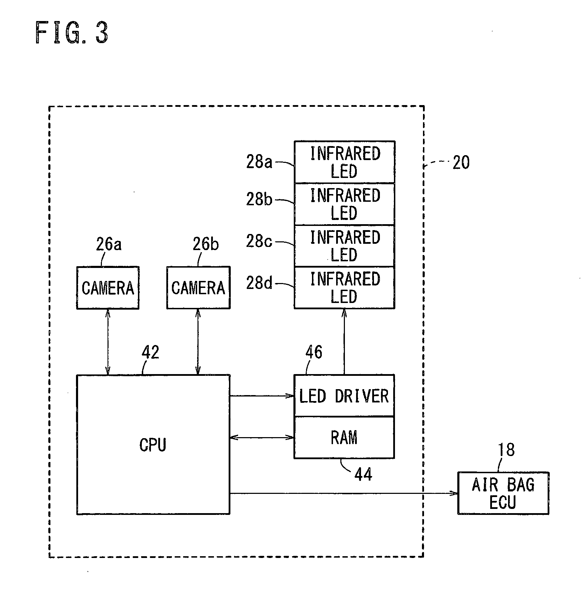

FIG. 3 is an electric block diagram of the camera unit 20 shown in FIG. 1.

The camera unit 20 includes, in addition to the cameras 26a, 26b and the infrared LEDs 28a through 28d, a CPU (Central Processing Unit) 42, a RAM 44, and an LED driver 46.

The CPU 42 reads and executes a program stored in a recording medium such as the RAM 44 or the like, so as to control various components of the camera unit 20. The CPU 42 may be replaced with a DSP (Digital Signal Processor).

The LED driver 46 energizes and de-energizes the infrared LEDs 28a through 28d at appropriate timings in response to control signals from the CPU 42 (an image capture controller 64, to be described later). The LED driver 46 is capable of controlling the infrared LEDs 28a through 28d synchronously (or asynchronously).

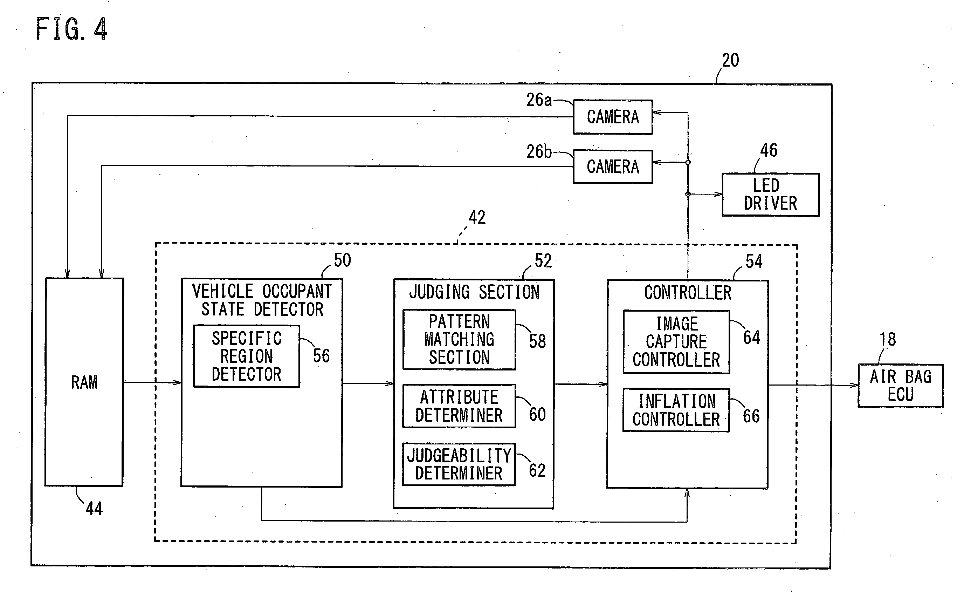

FIG. 4 is a functional block diagram of the CPU 42 shown in FIG. 3.

The CPU 42 functions as a vehicle occupant state detector 50 (vehicle occupant state detecting unit) for detecting a state of the vehicle occupant 12 based on image data Da, Db (images) output sequentially from the cameras 26a, 26b, a judging section 52 (judging unit) for judging whether or not a vehicle occupant 12 is present, and a controller 54 (control unit) for controlling various components involved in capturing of images in the cabin of the vehicle, and for sending control signals to and receiving control signals from another ECU, e.g., the air bag ECU 18.

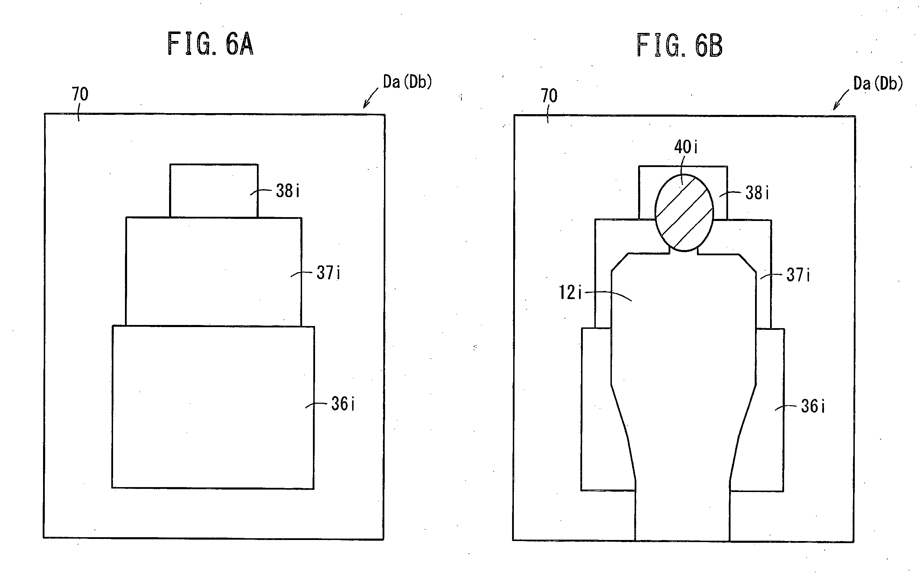

The vehicle occupant state detector 50 has a specific region detector 56 for detecting a specific region, e.g., the head 40 of the vehicle occupant 12, from an image area 70 (see FIG. 6A, etc.) represented by the image data Da, Db.

The judging section 52 includes a pattern matching section 58 for recognizing the type of object, e.g., a child seat, included within the image data Da, Db, an attribute determiner 60 for determining the attribute of an object placed on the seat 34 (see FIG. 1), and a judgeability determiner 62 (judgeability determining unit) for determining if the attribute determiner 60 is capable of determining whether or not a vehicle occupant 12 is present in the vehicle.

The controller 54 includes an image capture controller 64 for transmitting at suitable times control signals concerning image capturing operations of the cameras 26a, 26b, etc., and an inflation controller 66 for transmitting at suitable times various pieces of information (occupant information of the vehicle occupant 12) used to control inflation of the air bag AB.

Operations of the vehicle occupant detecting apparatus 14 according to the first embodiment of the present invention, which basically is constructed as described above, will be described below with reference to the flowchart shown in FIG. 5.

In step S1, the image capture controller 64 reads an image capture mode that is set at the present time. Image capture modes are roughly classified into a "high-speed mode" in which the image capturing interval is relatively short, and a "low-speed mode" in which the image capturing interval is relatively long. In the present description, image capturing intervals refer to time intervals at which the cameras 26a, 26b capture images. In a time zone in which the image capturing intervals are constant, the image capturing intervals correspond to image capturing cyclic periods.

In the high-speed mode, the image capture controller 64 sets a threshold value corresponding to an image capturing interval of about 33 ms (30 frames per second). In the low-speed mode, the image capture controller 64 sets a threshold value corresponding to an image capturing interval of about 10 s (0.1 frame per second). The numerical values of the image capturing intervals may be changed appropriately. There may be three or more image capture modes. The image capturing intervals in the image capture modes may be variable in duration. For example, in the low-speed mode, the image capturing interval may be determined as lying within a range from 5 to 15 s.

In step S2, the image capture controller 64 initializes a counter value.

In step S3, the image capture controller 64 compares the magnitudes of the counter value at the present time and the threshold value that was set in step S1. If the counter value does not exceed the threshold value, then the image capture controller 64 increments the counter value by 1 (step S4). Thereafter, control returns to step S3, and steps S3, S4 are repeated. If the counter value exceeds the threshold value, then control proceeds to the next step (step S5).

In step S5, the camera unit 20 acquires image data Da, Db in the cabin (particularly in the vicinity of the seat 34). More specifically, the image capture controller 64 sends drive signals to the cameras 26a, 26b and the LED driver 46. For example, the image capture controller 64 energizes the infrared LEDs 28a, 28b, which are disposed in the vicinity of the camera 26a, to emit light in synchronism with the exposure timing of the camera 26a, and also energizes the infrared LEDs 28c, 28d, which are disposed in the vicinity of the camera 26b, to emit light in synchronism with the exposure timing of the camera 26b. Therefore, electric power consumed by the infrared LEDs 28a through 28d is reduced, and deterioration of components is reduced. Furthermore, it is possible to capture images in a more stable manner.

Thereafter, the camera unit 20 outputs the image data Da, Db respectively from the cameras 26a, 26b, and temporarily stores the image data Da, Db as latest image data in the RAM 44.

In step S6, the vehicle occupant state detector 50 and the judging section 52 judge the state of the vehicle occupant 12. A specific example of a determining process will be described in detail below with reference to FIGS. 6A through 7B.

According to the first embodiment (as well as a second embodiment, to be described later), the attribute determiner 60 classifies and determines an object as having one of six attributes, to be described below, based on the results of an analysis of the object that is present (or not present) between the camera 26a (26b) and the seat 34.

More specifically, the attribute determiner 60 classifies a human being (vehicle occupant 12) who is greater than a predetermined size as "adult", and classifies a human being (vehicle occupant 12) who is equal to or smaller than the predetermined size as "child". The attribute determiner 60 classifies an object (child seat) having a predetermined shape as "CRS (Child Restraint System)" and classifies an object having a different shape, e.g., a rectangular shape, a circular shape, or the like, as "baggage". If an object is not present between the camera 26a (26b) and the seat 34, then the attribute determiner 60 classifies the non-presence of the object as "empty seat". If none of the above five attributes is applicable, then the attribute determiner 60 classifies the situation as "other". The object attributes are not limited to the above rules. For example, "animal" may be included as another attribute for classification of an animal such as a dog, a cat, or the like, and the attribute "baggage" may be classified into more detailed attributes.

Before the attribute determiner 60 determines an attribute, the specific region detector 56 and the pattern matching section 58 perform a predetermined pattern matching process using the image data Da (Db) acquired from the RAM 44.

As shown in FIG. 6A, if an object is not present between the camera 26a (26b) and the seat 34, the image area 70 represented by the image data Da (Db) contains an image area 36i based on the seat bottom 36, an image area 37i based on the backrest 37, and an image area 38i based on the headrest 38, in a predetermined positional relationship. The pattern matching section 58 judges whether the attribute "empty seat" applies by calculating a correlation between a certain image area that lies within the image area 70 and a prepared template.

As shown in FIG. 6B, when the vehicle occupant 12 is seated on the seat 34, the image area 70 represented by the image data Da (Db) contains an image area 12i therein, which is based on the vehicle occupant 12, in overlapping relation to the image areas 36i through 38i. The specific region detector 56 judges whether or not an image area 40i based on the head 40 is present by calculating a correlation between a certain image area that lies within the image area 70 and a prepared template. The specific region detector 56 may set a search range using the headrest 38 (image area 38i) as a reference. If the vehicle occupant state detector 50 also detects the vertical position of the head 40 (image area 40i), then the attribute determiner 60 also is capable of determining whether the vehicle occupant 12 is an "adult" or a "child".

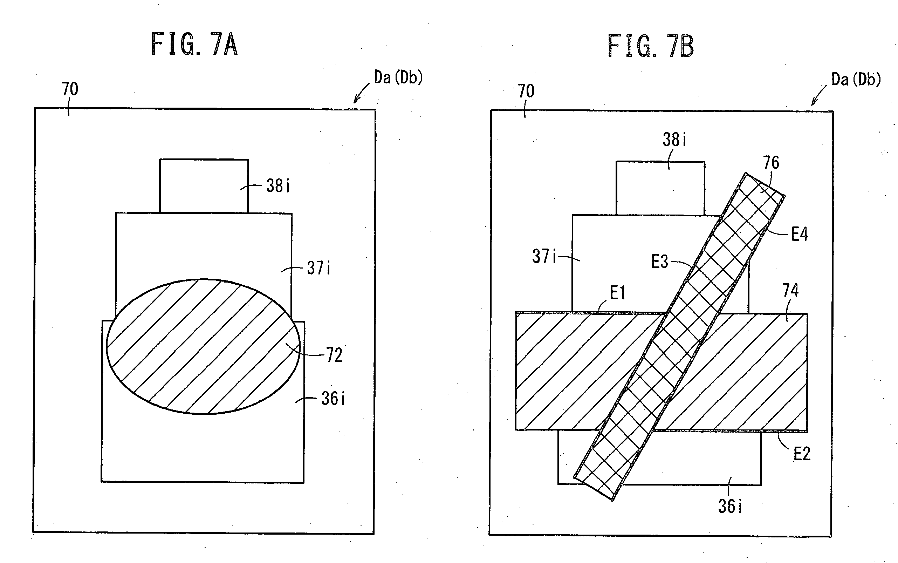

As shown in FIG. 7A, when a child seat, which is of an elliptical shape as viewed in front elevation, is secured to the seat 34 (seat bottom 36), the image area 70 represented by the image data Da (Db) contains an image area 72 therein, which is based on the child seat, in overlapping relation to the image areas 36i, 37i. The pattern matching section 58 judges whether or not the child seat is classifiable as "CRS" by calculating the correlation between a certain image area that lies within the image area 70 and an elliptical template.

As shown in FIG. 7B, when a first baggage in the form of a rectangular parallelepiped is placed on the seat bottom 36, and a second baggage in the form of a prismatic column is propped against the seat 34, the image area 70 represented by the image data Da (Db) contains an image area 74 therein, which is based on the first baggage, in overlapping relation to the image areas 36i, 37i. The image area 70 also contains an image area 76 therein, which is based on the second baggage, in overlapping relation to the image areas 36i, 37i, 74. The pattern matching section 58 may judge, for example, whether or not a straight profile line, which is longer than a predetermined length, e.g., the length of a seat belt, not shown, can be extracted from the image area 70. As shown in FIG. 7B, if at least one profile line (edges E1 through E4) is extracted, then the attribute determiner 60 judges that the first baggage and/or the second baggage is classifiable as "baggage" or "CRS". If the non-illustrated seat belt can be detected as being fastened, then the attribute determiner 60 can make more detailed judgments. For example, if the seat belt is fastened, then the attribute determiner 60 judges that the first baggage and/or the second baggage is classifiable as "CRS", whereas if the seat belt is not fastened, then the attribute determiner 60 judges that the first baggage and/or the second baggage is classifiable as "baggage".

The present invention is not limited to the above processes, but may employ various other judgment conditions. For example, the attribute determiner 60 may determine the attribute of an object depending on the area (number of pixels) of an image area that is made up of substantially uniform pixel values. Various judgment conditions may also be combined with each other for increasing the accuracy with which the attributes are detected.

The judgeability determiner 62 may determine if the attribute determiner 60 is capable of determining whether or not a vehicle occupant 12 is present, by referring to the detected or determined result from the specific region detector 56 or the attribute determiner 60. For example, if various items of information including the image data Da, Db cannot be acquired appropriately, or if a plurality of determined results, which are contradictory to each other, are obtained, then the judgeability determiner 62 may determine that the attribute determiner 60 is incapable of determining the presence of a vehicle occupant 12, and classifies the situation as the attribute "other".

In step S7, depending on the result of the vehicle occupant judging process, the image capture controller 64 selects one of the high-speed mode and the low-speed mode. According to the first embodiment, one of the six attributes classified and determined by the attribute determiner 60 is used as the result of the vehicle occupant judging process. More specifically, if the result (attribute) of the vehicle occupant judging process indicates any one of "adult", "child", and "other", then the judging section 52 judges that a vehicle occupant 12 is present on the seat 34. If the result (attribute) of the vehicle occupant judging process indicates any one of "empty seat", "baggage", and "CRS", then the judging section 52 judges that a vehicle occupant 12 is not present on the seat 34.

If it is determined that a vehicle occupant 12 is present, then since the state of the vehicle occupant 12 must be detected instantaneously and with high accuracy, the image capture controller 64 selects the high-speed mode, in which the image capturing interval is relatively short (step S8). On the other hand, if it is determined that a vehicle occupant 12 is not present, then since the state of a region around the seat 34 does not need to be detected instantaneously and with high accuracy, the image capture controller 64 selects the low-speed mode, in which the image capturing interval is relatively long (step S9).

In step S10, the vehicle occupant detecting apparatus 14 sends the detected vehicle occupant information to another ECU, e.g., the air bag ECU 18. The vehicle occupant information may contain not only the result of the vehicle occupant judging process performed by the judging section 52, but also the state of the vehicle occupant 12, e.g., the position of the head 40 of the vehicle occupant 12, as detected by the vehicle occupant state detector 50. The position of the head 40 in a depthwise direction can accurately be detected by a stereo image capturing process, which is performed using both of the cameras 26a, 26b.

Based on the supplied vehicle occupant information, the air bag ECU 18 determines whether or not the air bag AB should be inflated, and the extent to which the air bag AB should be inflated. Alternatively, the controller 54 (inflation controller 66) may determine whether or not the air bag AB is capable of being inflated, and the extent to which the air bag AB should be inflated, and send a control signal to the air bag ECU 18.

If a single camera unit 20 is disposed in the cabin of the vehicle, then it is preferable to determine whether a vehicle occupant 12 is present on the front passenger's seat from among the plurality of seats 34 in the cabin. This is because an air bag AB is inflated in front of a vehicle occupant 12 on the front passenger's seat, and it is necessary to detect the state of the vehicle occupant 12 (particularly, the position of the head 40) on the front passenger's seat with high accuracy, compared with the rear passenger seats where the air bags AB are inflated sideways. If the image capturing interval is controlled depending on whether or not a vehicle occupant 12 is present on the front passenger's seat, then the vehicle occupant 12 can be detected appropriately with a minimum required arrangement.

An image capturing unit (monocular unit, multiocular unit, or combination of monocular and multiocular units) such as the cameras 26a, 26b may be provided respectively for each seat 34. If the image capturing unit is provided for each seat 34, the image capturing unit is capable of detecting the state of a vehicle occupant 12 on each seat 34 with high accuracy, irrespective of the angle at which the cameras 26a, 26b are installed and the angle of field of the cameras 26a, 26b. Further, electric power consumption and deterioration of components can be minimized by controlling the image capturing intervals, depending on whether or not a vehicle occupant 12 is present on each seat 34 of the vehicle.

Accordingly, when the vehicle occupant detecting apparatus 14 repeatedly carries out the operation sequence according to the flowchart shown in FIG. 5, the vehicle occupant detecting apparatus 14 is capable of sequentially detecting the state of the vehicle occupant 12 in the cabin of the vehicle.

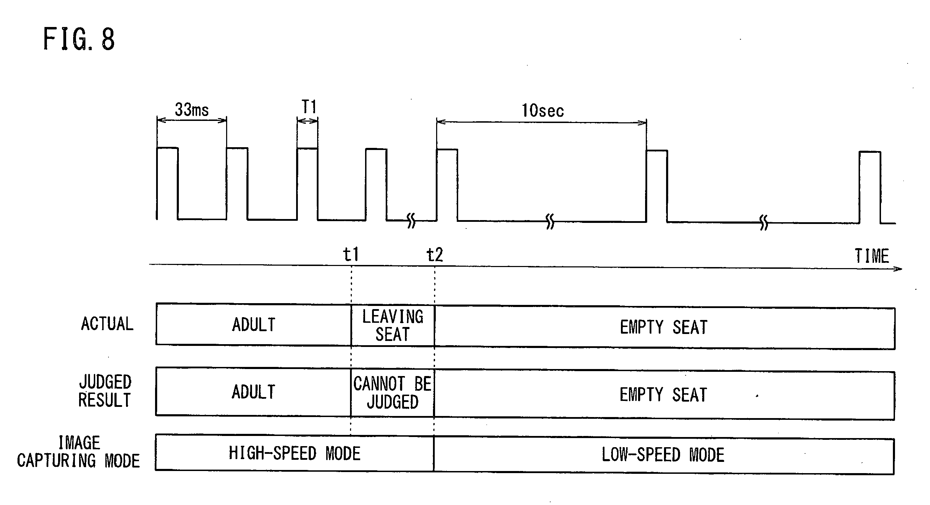

Operations of the vehicle occupant detecting apparatus 14 during a time that a vehicle occupant 12, who has been seated on a given seat 34, gets off from the seat 34, will be described below with reference to the timing chart shown in FIG. 8.

In the time zone up to time t1, it is assumed that an adult vehicle occupant 12 has been seated on the seat 34. The cameras 26a, 26b produce image data Da, Db as shown in FIG. 6B (see step S5 of FIG. 5), and the attribute determiner 60 judges that the result (attribute) of the vehicle occupant judging process indicates "adult" (see step S6 in FIG. 5). As a result, the "high-speed mode" is selected (see step S8 in FIG. 5).

In the time zone between time t1 and time t2, it is assumed that the vehicle occupant 12 is making a move in order to vacate the seat 34 (seat leaving movement). If the head 40 cannot be detected, then the judgeability determiner 62 determines that the attribute determiner 60 is "incapable of determining (other)" whether a vehicle occupant 12 is present or not (see step S6 in FIG. 5). As a result, the "high-speed mode" is selected (see step S8 in FIG. 5).

Then, in the time zone after time t2, it is assumed that the seat 34 is continuously empty. The cameras 26a, 26b produce image data Da, Db as shown in FIG. 6A (see step S5 shown in FIG. 5), and the attribute determiner 60 judges that the result (attribute) of the vehicle occupant judging process indicates "empty seat" (see step S6 in FIG. 5). As a result, the "low-speed mode" is selected (see step S8 in FIG. 5).

In the vicinity of time t2, although in fact a vehicle occupant 12 is seated on the seat, it may possibly be judged temporarily by the attribute determiner 60 that a vehicle occupant 12 is not present, due to an insufficient amount of exposure to infrared radiation applied to the cameras 26a, 26b, or due to the cameras 26a, 26b being subjected to electric noise, or the like. To cope with such a drawback, if a vehicle occupant 12 has not been detected a plurality of times from a plurality of image data Da (Db) that have been output sequentially, then in step S7 of FIG. 5, the judging section 52 may judge that a vehicle occupant 12 is not present on the seat 34. In this manner, the reliability of the detection accuracy of the vehicle occupant 12 is increased.

As described above, if it is judged that a vehicle occupant 12 is not present on the seat 34, an image is captured in the low-speed mode, the image capturing intervals of which are relatively longer than if it is judged that a vehicle occupant 12 is present on the seat 34. Considering the control property, in light of the fact that there is no need to detect the state of a vehicle occupant 12 highly accurately and instantaneously if a vehicle occupant 12 does not reside within the image capturing range of each of the cameras 26a, 26b, it is possible to reduce the total number of images captured within the operation time of the vehicle occupant detecting apparatus 14. Such a control property is effective to reduce electric power consumption as well as to reduce deterioration of components that make up the cameras 26a, 26b. In the specific example shown in FIG. 8, electric power consumption was greatly reduced by reducing the total number of captured images to 1/300 after the vehicle occupant 12 had left the vehicle.

### [Second Embodiment]

FIG. 9 is a schematic view of an air bag system 100 incorporating a vehicle occupant detecting apparatus according to a second embodiment of the present invention. Those parts of the vehicle occupant detecting apparatus according to the second embodiment, which are identical to those of the vehicle occupant detecting apparatus according to the first embodiment, are denoted by identical reference characters, and such features will not be described in detail below.

As with the first embodiment (see FIG. 1), the air bag system 100 basically comprises a vehicle occupant detecting apparatus 102, an air bag and inflator assembly 16 (air bag device), and an air bag ECU (Electronic Control Unit) 18.

The vehicle occupant detecting apparatus 102 includes, in addition to a camera unit 104, a door switch (hereinafter referred to as a "door SW 106"), which serves as a unit for detecting an opened/closed state of a door, not shown, and a buckle switch (hereinafter referred to as a "buckle SW 108"), which serves as a unit for detecting a fastened/unfastened state of a seat belt, not shown.

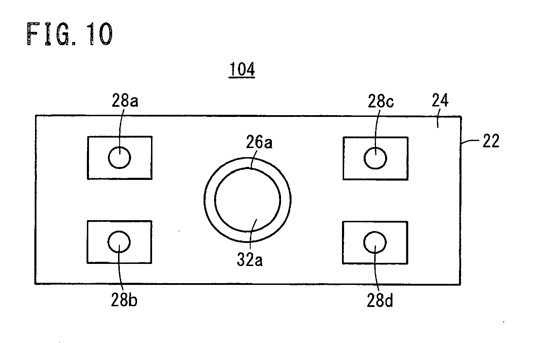

As shown in FIG. 10, the camera unit 104 includes a substantially rectangular casing 22, which supports on a surface 24 thereof a camera 26a (image capturing unit), and four infrared LEDs 28a, 28b, 28c, 28d (lighting units). As with the first embodiment, when a vehicle occupant 12 is seated on the seat 34, a portion (including a head 40) of the vehicle occupant 12 falls within the image capturing range of the camera 26a.

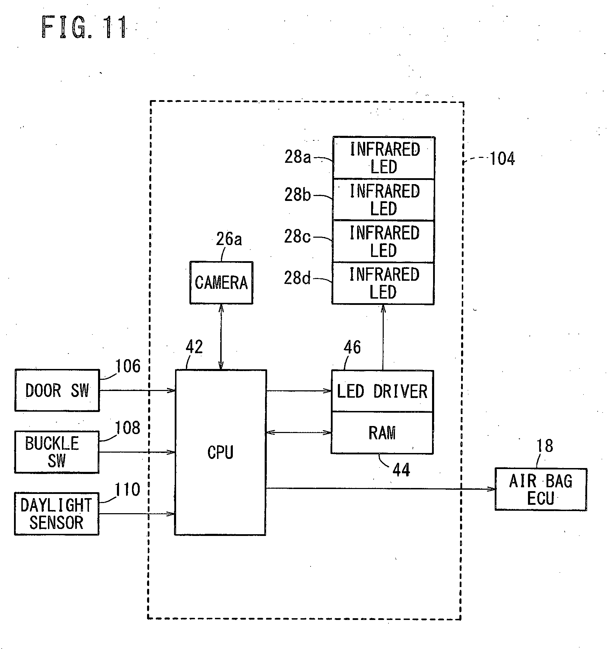

FIG. 11 is an electric block diagram of the camera unit 104 shown in FIG. 10.

The camera unit 104 includes, in addition to the camera 26a and the infrared LEDs 28a through 28d, a CPU 42, a RAM 44, and an LED driver 46.

The CPU 42 is supplied not only with image data Da from the camera 26a, but also signals representing the opened/closed state of the door from the door SW 106, the fastened/unfastened state of the seat belt from the buckle SW 108, and a sensor value from a daylight sensor 110 (all of these signals will hereinafter be referred to collectively as "judgment information"). The CPU 42 may also be supplied with information, which is directly or indirectly correlated with the lightness in the cabin of the vehicle, e.g., an operational state of a wiper on the windshield, together with or instead of the sensor value from the daylight sensor 110. If the wiper is in operation, it is presumed that it is raining at present, and therefore that the illuminance in the cabin is low.

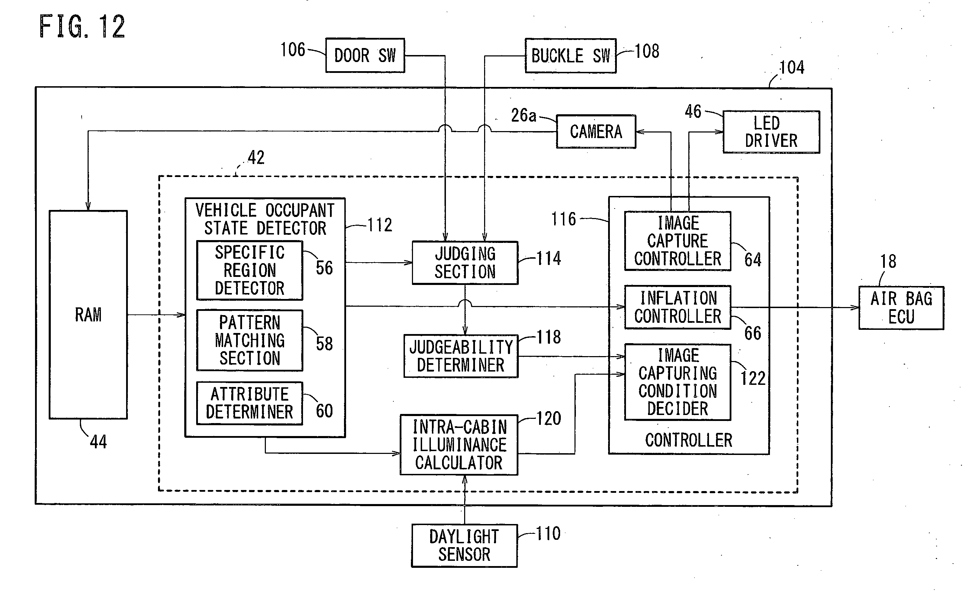

FIG. 12 is a functional block diagram of the CPU 42 and peripheral components thereof as shown in FIG. 11.

The CPU 42 functions as a vehicle occupant state detector 112 (vehicle occupant state detecting unit) for detecting the state of the vehicle occupant 12 based on image data Da acquired from the camera 26a, a judging section 114 (judging unit) for judging whether or not a vehicle occupant 12 is present based on the judgment information, a controller 116 (control unit) for controlling various components involved in capturing of images in the cabin of the vehicle, and for sending control signals to and receiving control signals from the air bag ECU 18, a judgeability determiner 118 for determining whether or not the judging section 114 is capable of judging the presence of a vehicle occupant 12, and an intra-cabin illuminance calculator 120 (calculating unit) for calculating a lightness (e.g., illuminance, brightness) in the cabin of the vehicle.

The vehicle occupant state detector 112 includes, in addition to the specific region detector 56, the pattern matching section 58 and the attribute determiner 60 (see FIG. 4), which have been referred to above.

The controller 116 includes, in addition to the image capture controller 64 and the inflation controller 66, an image capturing condition decider 122 for deciding image capturing conditions for the camera unit 104. Such image capturing conditions refer to various conditions for capturing images with the camera unit 104. More specifically, the image capturing conditions include not only image capturing intervals, but also an exposure time of the camera 26a, the number of infrared LEDs 28a through 28d, and the period of time during which the infrared LEDs 28a through 28d are energized, etc.

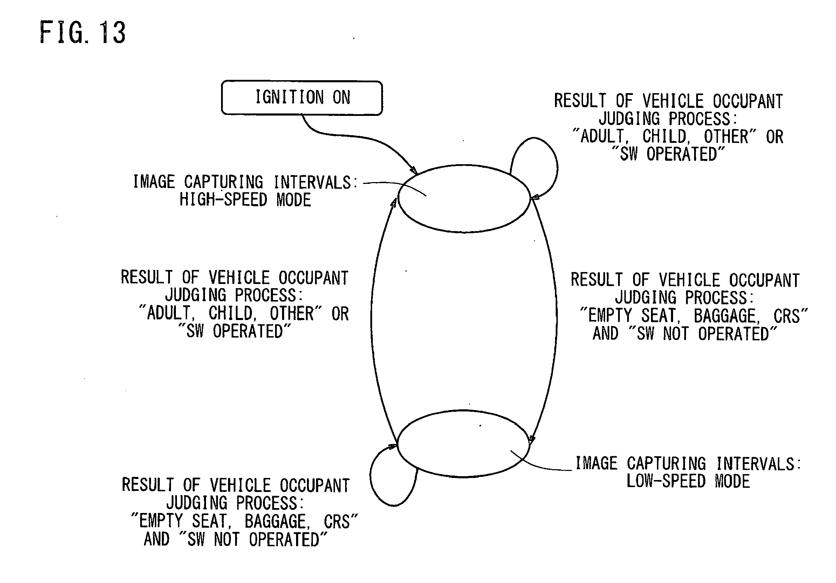

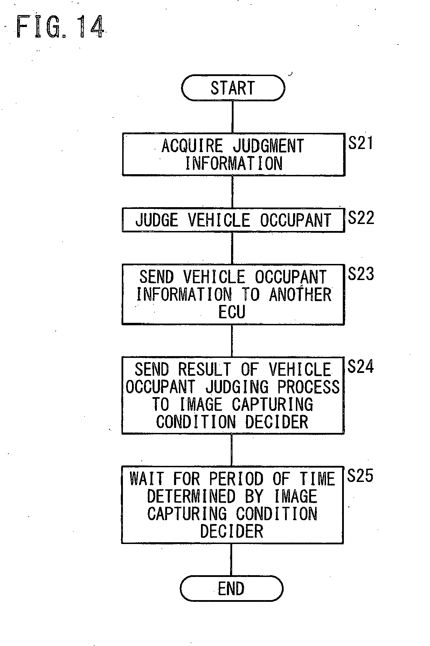

Operations of the vehicle occupant detecting apparatus 102 according to the second embodiment of the present invention, which basically is constructed as described above, will be described below with reference to the state transition diagram shown in FIG. 13 and the flowchart shown in FIG. 14.

FIG. 13 is a state transition diagram with respect to image capturing performed by the vehicle occupant detecting apparatus 102 shown in FIG. 9. When the event "IGNITION ON" occurs, the vehicle occupant detecting apparatus 102 is operated to start capturing images. Initially, the vehicle occupant detecting apparatus 102 enters the "high-speed mode", and thereafter, the vehicle occupant detecting apparatus 102 transitions between the "high-speed mode" and the "low-speed mode" depending on the result of the vehicle occupant judging process.

FIG. 14 is a flowchart of an operation sequence of the vehicle occupant detecting apparatus 102 at times that the vehicle occupant detecting apparatus 102 enters into each of the respective image capturing modes.

In step S21, the camera unit 104 acquires judgment information required for determining whether or not a vehicle occupant is present. More specifically, the judging section 114 acquires an attribute of an object, which is determined based on the image data Da from the vehicle occupant state detector 112. The judging section 114 also acquires the opened/closed state of the door, not shown. Furthermore, the judging section 114 acquires the fastened/unfastened state of the seat belt, not shown. The intra-cabin illuminance calculator 120 acquires a sensor value (brightness of the image data Da) from the daylight sensor 110 (or the vehicle occupant state detector 112).

In step S22, based on the judgment information acquired in step S21, the judging section 114 judges whether or not a vehicle occupant 12 is present.

According to the second embodiment, the result of the vehicle occupant judging process includes not only the six attributes, which are classified and determined by the attribute determiner 60, but also operations of certain switches (SW). Operation of the door SW 106 refers to a state of the door SW 106, which has changed from ON to OFF (door opened), or a state of the door SW 106, which has changed from OFF to ON (door closed). Operation of the buckle SW 108 refers to a state of the buckle SW 108, which has changed from ON to OFF (seat belt unfastened), or a state of the buckle SW 108, which has changed from OFF to ON (seat belt fastened). Hereinafter, the attribute "SW operated" implies that at least one of operation of the door SW 106 and operation of the buckle SW 108 is detected, whereas the attribute "SW not operated" implies that one of operation of the door SW 106 and operation of the buckle SW 108 is not detected.

More specifically, if the result (attribute) of the vehicle occupant judging process indicates any one of "adult", "child", and "other", or "SW operated", then the judging section 114 judges that a vehicle occupant 12 is present on the seat 34. If the result (attribute) of the vehicle occupant judging process indicates any one of "empty seat", "baggage", "CRS", and "SW not operated", then the judging section 114 judges that a vehicle occupant 12 is not present on the seat 34.

The judgeability determiner 118 determines whether or not the judging section 114 is capable of judging the presence of a vehicle occupant 12. The judgeability determiner 118 may determine whether or not the judging section 114 is capable of judging the presence of a vehicle occupant 12 by referring to the determined result from the attribute determiner 60, and the detected results from the door SW 106, the buckle SW 108, etc.

In step S23, the vehicle occupant detecting apparatus 102 sends the detected vehicle occupant information to another ECU, e.g., the air bag ECU 18. This operation is the same as the operation performed in the vehicle occupant detecting apparatus 14 according to the first embodiment, and will not be described in detail below.

In step S24, the judgeability determiner 118 sends the judged occupant result from the judging section 114 to the image capturing condition decider 122. In synchronism with sending of the judged result, the intra-cabin illuminance calculator 120 acquires a calculated result concerning the lightness in the cabin of the vehicle (hereinafter referred to as a "calculated illuminance result") based on the sensor value from the daylight sensor 110 (or the brightness of the image data Da from the vehicle occupant state detector 112), and supplies the calculated result to the image capturing condition decider 122. Based on the judged occupant result and the calculated illuminance result, the image capturing condition decider 122 determines image capturing conditions for a next image capturing process.

In step S25, the image capture controller 64 waits for a certain period of time, as determined by the image capturing condition decider 122. More specifically, as shown in FIG. 13, if the vehicle occupant detecting apparatus 102 has entered the "high-speed mode", the image capture controller 64 waits for about 33 ms (the image capturing time in the high-speed mode), and if the vehicle occupant detecting apparatus 102 has entered the "low-speed mode", the image capture controller 64 waits for about 10 s (the image capturing time in the low-speed mode).

Accordingly, the vehicle occupant detecting apparatus 102 repeatedly carries out the sequence of operations according to the state transition diagram shown in FIG. 13 and the flowchart shown in FIG. 14, whereby the vehicle occupant detecting apparatus 102 is capable of sequentially detecting the state of the vehicle occupant 12 in the cabin of the vehicle. In the low-speed mode, when the door SW 106 detects the door as being opened or closed, or the buckle SW 108 detects the seat belt as being fastened or unfastened, the image capture controller 64 preferably changes from the low-speed mode to the high-speed mode for capturing images with the camera 26a. More specifically, when the door is detected as being opened or closed and the seat belt is detected as being fastened or unfastened, a vehicle occupant 12 is presumed to be getting on the vehicle or getting off from the vehicle, so that the state of the vehicle occupant 12 is detected at appropriate times.

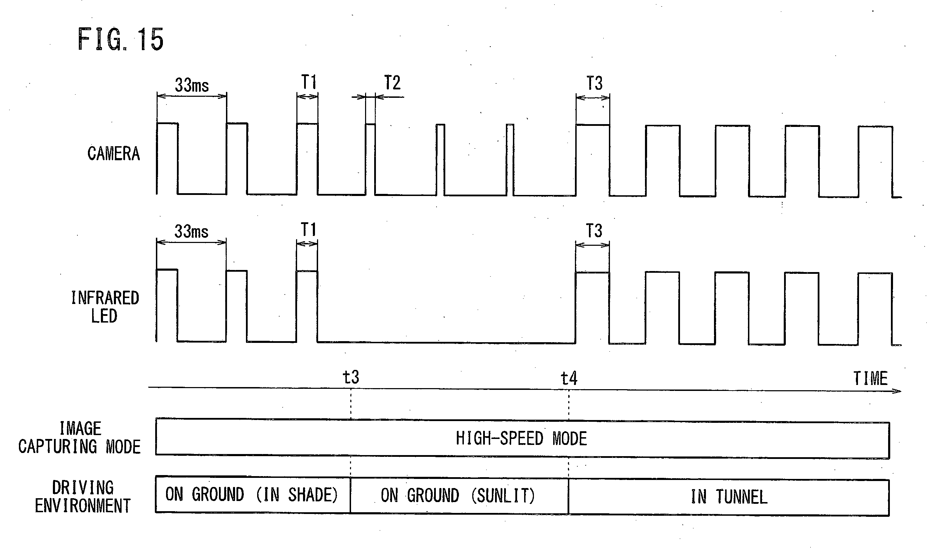

Operations of the vehicle occupant detecting apparatus 102 during a time that the vehicle is traveling will be described below with reference to the timing chart shown in FIG. 15. It is assumed that a vehicle occupant 12 is seated on a seat 34 to be detected (front passenger seat), and that the high-speed mode normally is selected.

In the time zone up to time t3, it is assumed that the vehicle travels on the ground (in a shaded area). The sensor value read by the daylight sensor 110 is smaller than a predetermined first threshold value. At this time, the image capturing condition decider 122 decides both the exposure time of the camera 26a, as well as the period of time during which the infrared LEDs 28a through 28d are energized, to be a standard value of T1.

In the time zone between time t3 and time t4, it is assumed that the vehicle travels on the ground (in a sunlit area). In this case, the sensor value read by the daylight sensor 110 is greater than the predetermined first threshold value. At this time, the image capturing condition decider 122 decides that external light is sufficiently intensive, and determines image capturing conditions in order to minimize the periods of time during which the camera 26a and the infrared LEDs 28a through 28d are energized. For example, the image capturing condition decider 122 decides the exposure time of the camera 26a to be a value of T2, which is smaller than the value of T1. The image capturing condition decider 122 also decides the period of time during which the infrared LEDs 28a through 28d are energized to be 0.

In the time zone after time t4, it is assumed that the vehicle travels in a tunnel. The sensor value read by the daylight sensor 110 is smaller than a predetermined second threshold value, which is smaller than the first threshold value. At this time, the image capturing condition decider 122 decides that external light is sufficiently weak, and determines image capturing conditions in order to provide the camera 26a with sufficient exposure to infrared radiation from the infrared LEDs 28a through 28d. The image capturing condition decider 122 decides both the exposure time of the camera 26a, as well as the period of time during which the infrared LEDs 28a through 28d are energized, to be a value of T3, which is greater than the value of T1.

As described above, if the brightness or the illuminance calculated by the intra-cabin illuminance calculator 120 is equal to or greater than the predetermined value (first threshold value), then the controller 116 (image capture controller 64) preferably shortens the exposure time of the camera 26a and the period of time during which the infrared LEDs 28a through 28d are energized, or inhibits the infrared LEDs 28a through 28d from emitting infrared radiation. Accordingly, electric power consumption and deterioration of components can be minimized by appropriately controlling the camera 26a and the infrared LEDs 28a through 28d depending on the brightness and the illuminance. The above control process is particularly effective if the infrared LEDs 28a through 28d are of a high brightness level and produce a high output level. With the emission time being shortened, the amount of generated heat is reduced, thereby allowing the electric components included in the camera unit 104 to operate in a stable manner.

## Claims

1. A vehicle occupant detecting apparatus (14, 102) comprising:
an image capturing unit (26a, 26b) disposed in a cabin of a vehicle, for sequentially outputting images (Da, Db), which are captured at predetermined image capturing intervals, of a predetermined area including a seat (34) in the cabin of the vehicle;
a judging unit (52, 114) for judging whether or not a vehicle occupant (12) is present on the seat (34) in the predetermined area; and
a vehicle occupant state detecting unit (50, 112) for detecting a state of the vehicle occupant (12) based on the images (Da, Db) output from the image capturing unit (26a, 26b);
the vehicle occupant detecting apparatus (14, 102) further comprising:
a control unit (54, 116) for controlling the image capturing intervals depending on a judged result from the judging unit (52, 114),
wherein the control unit (54, 116) controls the image capturing unit (26a, 26b) to capture the images in a high-speed mode, in which the image capturing intervals are relatively short, if the judging unit (52, 114) judges that the vehicle occupant (12) is present, and controls the image capturing unit (26a, 26b) to capture the images in a low-speed mode, in which the image capturing intervals are relatively long, if the judging unit (52, 114) judges that the vehicle occupant (12) is not present.

2. The vehicle occupant detecting apparatus (14, 102) according to claim 1, wherein:
the judging unit (52, 114) judges whether or not the vehicle occupant (12) is present according to a pattern matching process on the images (Da, Db) output from the image capturing unit (26a, 26b), and judges that the vehicle occupant (12) is not present if a shape representing any one of an empty seat, a child seat, and baggage having a predetermined shape is detected by the pattern matching process.

3. The vehicle occupant detecting apparatus (14, 102) according to claim 1 or 2, wherein:
the judging unit (52, 114) judges that the vehicle occupant (12) is not present if the vehicle occupant (12) is not detected at a plurality of successive times in the images (Da, Db), which are output sequentially from the image capturing unit (26a, 26b).

4. The vehicle occupant detecting apparatus (14, 102) according to any one of claims 1 through 3, further comprising:
an air bag device (16) for inflating an air bag (AB) when the vehicle collides with an obstacle;
wherein the predetermined area is established such that the one image capturing unit (26a, 26b) can capture an image of all of the seats (34) that are disposed in the cabin of the vehicle;
the judging unit (52, 114) judges whether or not the vehicle occupant (12) is present on a front passenger's seat from among all of the seats (34), images of which are captured by the image capturing unit (26a, 26b);
the vehicle occupant state detecting unit (50, 112) detects a position of a head (40) of the vehicle occupant (12) as the state of the vehicle occupant (12); and
the control unit (54, 116) controls the image capturing intervals depending on whether or not the vehicle occupant (12) is present on the front passenger's seat, as judged by the judging unit (52, 114), and controls whether or not the air bag (AB) should be inflated or the extent to which the air bag (AB) should be inflated, based on the position of the head (40) that is detected by the vehicle occupant state detecting unit (50, 112).

5. The vehicle occupant detecting apparatus (14, 102) according to any one of claims 1 through 3, wherein:
the image capturing unit (26a, 26b) is associated with each of the seats (34);
the judging unit (52, 114) judges whether or not the vehicle occupant (12) is present on each of the seats (34) based on the images (Da, Db) output from the image capturing unit (26a, 26b); and
the control unit (54, 116) controls the image capturing intervals for each of the image capturing units (26a, 26b) based on whether or not the vehicle occupant (12) is present on each of the seats (34), as judged by the judging unit (52, 114).

6. The vehicle occupant detecting apparatus (102) according to any one of claims 1 through 5, further comprising:
a door opening/closing detecting unit (106) for detecting whether a door of the vehicle is opened or closed; and
a seat belt fastening/unfastening detecting unit (108) for detecting whether a seat belt of the seat (34) is fastened or unfastened,
wherein the control unit (116) changes from the low-speed mode to the high-speed mode for the image capturing unit (26a) to capture the images if the door opening/closing detecting unit (106) detects that the door is opened or closed, or if the seat belt fastening/unfastening detecting unit (108) detects that the seat belt is fastened or unfastened, in the low-speed mode.

7. The vehicle occupant detecting apparatus (14, 102) according to any one of claims 1 through 6, further comprising:
a judgeability determining unit (62, 118) for determining whether or not the judging unit (52, 114) is capable of judging the presence of the vehicle occupant (12),
wherein the control unit (54, 116) controls the image capturing unit (26a, 26b) to capture the images in the high-speed mode if the judgeability determining unit (62, 118) determines that the judging unit (52, 114) is incapable of judging the presence of the vehicle occupant (12).

8. The vehicle occupant detecting apparatus (14, 102) according to any one of claims 1 through 7, further comprising:
a lighting unit (28a, 28b, 28c, 28d) for emitting light toward the predetermined area,
wherein the lighting unit (28a, 28b, 28c, 28d) emits light in synchronism with the image capturing intervals controlled by the control unit (54, 116).

9. The vehicle occupant detecting apparatus (102) according to claim 8, further comprising:
a calculating unit (120) for calculating one of a brightness of the images (Da) output from the image capturing unit (26a) and an illuminance in the cabin of the vehicle,
wherein the control unit (116) is capable of controlling at least one of an exposure time of the image capturing unit (26a), whether or not the lighting unit (28a, 28b, 28c, 28d) is capable of emitting light, and a light emission time of the lighting unit (28a, 28b, 28c, 28d), and shortens the exposure time of the image capturing unit (26a), shortens the light emission time of the lighting unit (28a, 28b, 28c, 28d), or inhibits the lighting unit (28a, 28b, 28c, 28d) from emitting light if the brightness or the illuminance calculated by the calculating unit (120) is equal to or greater than a predetermined value.

## Patentansprüche

1. Fahrzeuginsassen-Erkennungsvorrichtung (14, 102), welche aufweist:
eine Bildaufnahmeeinheit (26a, 26b), die in einer Kabine eines Fahrzeugs angeordnet ist, zum sequentiellen Ausgeben von zu vorbestimmten Bildaufnahmeintervallen aufgenommenen Bildern (Da, Db) eines vorbestimmten Bereichs einschließlich eines Sitzes (34) in der Kabine des Fahrzeugs;
eine Bewertungseinheit (52, 114) zum Bewerten, ob ein Fahrzeuginsasse (12) auf dem Sitz (34) in dem vorbestimmten Bereich vorhanden ist oder nicht; und
eine Fahrzeuginsassenzustand-Erkennungseinheit (50, 112) zum Erkennen eines Zustands des Fahrzeuginsassen (12) basierend auf den von der Bildaufnahmeeinheit (26a, 26b) ausgegebenen Bildern (Da, Db);
wobei die Fahrzeuginsassen-Erkennungsvorrichtung (14, 102) ferner aufweist:
eine Steuereinheit (54, 116) zum Steuern der Bildaufnahmeintervalle in Abhängigkeit von einem Bewertungsergebnis von der Bewertungseinheit (52, 114),
wobei die Steuereinheit (54, 116) die Bildaufnahmeeinheit (26a, 26b) ansteuert, um die Bilder in einem Hochgeschwindigkeitsmodus aufzunehmen, in dem die Bildaufnahmeintervalle relativ kurz sind, wenn die Bewertungseinheit (52, 114) bewertet, dass der Fahrzeuginsasse (12) vorhanden ist, und die Bildaufnahmeeinheit (26a, 26b) ansteuert, um die Bilder in einem Niedriggeschwindigkeitsmodus auszunehmen, in dem die Bildaufnahmeintervalle relativ lang sind, wenn die Bewertungseinheit (52, 114) bewertet, dass der Fahrzeuginsasse (12) nicht vorhanden ist.

2. Die Fahrzeuginsassen-Erkennungsvorrichtung (14, 102) nach Anspruch 1, wobei:
die Bewertungseinheit (52, 114) gemäß einem Musterabgleichprozess an den von den der Bildaufnahmeeinheit (26a, 26b) ausgegebenen Bildern (Da, Db) bewertet, ob der Fahrzeuginsasse (12) vorhanden ist oder nicht, und bewertet, dass der Fahrzeuginsasse (12) nicht vorhanden ist, wenn eine Form, die einen leeren Sitz, einen Kindersitz und/oder ein Gepäck mit vorbestimmter Form repräsentiert, durch den Musterabgleichprozess erkannt wird.

3. Die Fahrzeuginsassen-Erkennungsvorrichtung (14, 102) nach Anspruch 1 oder 2, wobei:
die Bewertungseinheit (52, 114) bewertet, dass der Fahrzeuginsasse (12) nicht vorhanden ist, wenn der Fahrzeuginsasse (12) mehrere aufeinanderfolgende Male in den Bildern (Da, Db), die sequentiell von der Bildaufnahmeeinheit (26a, 26b) ausgeben werden, nicht erkannt wird.

4. Die Fahrzeuginsassen-Erkennungsvorrichtung (14, 102) nach einem der Ansprüche 1 bis 3, die ferner aufweist:
eine Airbagvorrichtung (16) zum Aufblasen eines Airbags (AB), wenn das Fahrzeug mit einem Hindernis kollidiert;
wobei der vorbestimmte Bereich so erstellt ist, dass die eine Bildaufnahmeeinheit (26a, 26b) ein Bild von allen Sitzen (34) aufnehmen kann, die in der Kabine des Fahrzeugs angeordnet sind;
die Bewertungseinheit (52, 114) bewertet, ob der Fahrzeuginsasse (12) auf einem vorderen Passagiersitz von allen Sitzen (34), deren Bilder von der Bildaufnahmeeinheit (26a, 26b) aufgenommen werden, vorhanden ist oder nicht;
die Fahrzeuginsassenzustand-Erkennungseinheit (50, 112) eine Position eines Kopfs (40) des Fahrzeuginsassen (12) als den Zustand des Fahrzeuginsassen (12) erkennt; und
die Steuereinheit (54, 116) die Bildaufnahmeintervalle in Abhängigkeit davon steuert, ob der Fahrzeuginsasse (12) auf dem vorderen Passagiersitz vorhanden ist oder nicht, wie durch die Bewertungseinheit (52, 114) bewertet, und ob der Airbag (AB) aufgeblasen werden sollte oder nicht, oder das Ausmaß, auf das der Airbag (AB) aufgeblasen werden sollte, basierend auf der Position des Kopfs (40) steuert, der von der Fahrzeuginsassenzustand-Erkennungseinheit (50, 112) erfasst wird.

5. Die Fahrzeuginsassen-Erkennungsvorrichtung (14, 102) nach einem der Ansprüche 1 bis 3, wobei:
die Bildaufnahmeeinheit (26a, 26b) jedem der Sitze (34) zugeordnet ist;
die Bewertungseinheit (52, 114) basierend auf den von der Bildaufnahmeeinheit (26a, 26b) ausgegebenen Bildern (Da, Db) bewertet, ob der Fahrzeuginsasse (12) auf jedem der Sitze (34) vorhanden ist oder nicht; und
die Steuereinheit (54, 116) die Bildaufnahmeintervalle für jede der Bildaufnahmeeinheiten (26a, 26b) basierend darauf steuert, ob der Fahrzeuginsasse (12) auf jedem der Sitze (34) vorhanden ist oder nicht, wie durch die Bewertungseinheit (52, 114) bewertet.

6. Die Fahrzeuginsassen-Erkennungsvorrichtung (102) nach einem der Ansprüche 1 bis 5, die ferner aufweist:
eine Türöffnungs-/schließ-Erkennungseinheit (106) zum Erkennen, ob eine Tür des Fahrzeugs geöffnet oder geschlossen ist; und
eine Sicherheitsgurtanlege-/nichtanlege-Erkennungseinheit (108) zum Erkennen, ob ein Sicherheitsgurt des Sitzes (34) angelegt oder nicht angelegt ist,
wobei die Steuereinheit (116) von dem Niedriggeschwindigkeitsmodus zu dem Hochgeschwindigkeitsmodus für die Bildaufnahmeeinheit (26a) zum Aufnehmen der Bilder wechselt, wenn die Türöffnungs-/schließ-Erkennungseinheit (106) erkennt, dass die Tür geöffnet oder geschlossen wird, oder wenn im Niedriggeschwindigkeitsmodus die Sicherheitsgurtanlege-/nichtanlege-Erkennungseinheit (108) erkennt, dass der Sicherheitsgurt angelegt oder nicht angelegt ist.

7. Die Fahrzeuginsassen-Erkennungsvorrichtung (14, 102) nach einem der Ansprüche 1 bis 6, die ferner aufweist:
eine Bewertbarkeitsbestimmungseinheit (62, 118) zum Bestimmen, ob die Bewertungseinheit (52, 114) in der Lage ist oder nicht, das Vorhandensein des Fahrzeuginsassen (12) zu bewerten,
wobei die Steuereinheit (54, 116) die Bildaufnahmeeinheit (26a, 26b) ansteuert, um die Bilder im Hochgeschwindigkeitsmodus aufzunehmen, wenn die Bewertbarkeitsbestimmungseinheit (62, 118) bestimmt, dass die Bewertungseinheit (52, 114) nicht in der Lage ist, das Vorhandensein des Fahrzeuginsassen zu bewerten.

8. Die Fahrzeuginsassen-Erkennungsvorrichtung (14, 102) nach einem der Ansprüche 1 bis 7, die ferner aufweist:
eine Beleuchtungseinheit (28a, 28b, 28c, 28d) zum Abgeben von Licht zu dem vorbestimmten Bereich hin,
wobei die Beleuchtungseinheit (28a, 28b, 28c, 28d) Licht synchron mit den von der Steuereinheit (54, 116) gesteuerten Bildaufnahmeintervallen abgibt.

9. Die Fahrzeuginsassen-Erkennungsvorrichtung (102) nach Anspruch 8, die ferner aufweist:
eine Berechnungseinheit (120) zum Berechnen einer Helligkeit der von der Bildaufnahmeeinheit (26a) ausgegebenen Bilder (Da) oder einer Beleuchtungsstärke in der Kabine des Fahrzeugs,
wobei die Steuereinheit (116) in der Lage ist, eine Belichtungszeit der Bildaufnahmeeinheit (26a), ob die Beleuchtungseinheit (28a, 28b, 28c, 28d) zum Abgeben von Licht in der Lage ist oder nicht, und/oder eine Lichtabgabezeit der Beleuchtungseinheit (28a, 28b, 28c, 28d) zu steuern, und die Belichtungszeit der Bildaufnahmeeinheit (26a) verkürzt, die Lichtabgabezeit der Beleuchtungseinheit (28a, 28b, 28c, 28d) verkürzt, oder die Lichtabgabe von der Beleuchtungseinheit (28a, 28b, 28c, 28d) verhindert, wenn die von der Berechnungseinheit (120) berechnete Helligkeit oder Beleuchtungsstärke gleich oder größer als ein vorbestimmter Wert ist.

## Revendications

1. Appareil de détection d'occupant de véhicule (14, 102) comprenant :
une unité de capture d'image (26a, 26b) disposée dans un habitacle d'un véhicule, destinée à fournir séquentiellement en sortie des images (Da, Db), qui sont capturées à des intervalles de capture d'image prédéterminés, d'une zone prédéterminée incluant un siège (34) dans l'habitacle du véhicule ;
une unité de jugement (52, 114) destinée à juger si un occupant de véhicule (12) est présent ou non sur le siège (34) dans la zone prédéterminée ; et
une unité de détection d'état d'occupant de véhicule (50, 112) destinée à détecter un état de l'occupant de véhicule (12) sur la base des images (Da, Db) fournies en sortie par l'unité de capture d'image (26a, 26b) ;
l'appareil de détection d'occupant de véhicule (14, 102) comprenant en outre :
une unité de commande (54, 116) destinée à commander les intervalles de capture d'image en fonction d'un résultat jugé par l'unité de jugement (52, 114),
dans lequel l'unité de commande (54, 116) commande à l'unité de capteur d'image (26a, 26b) de capturer les images dans un mode grande vitesse, dans lequel les intervalles de capture d'image sont relativement courts, si l'unité de jugement (52, 114) juge que l'occupant du véhicule (112) est présent, et commande à l'unité de capture d'image (26a, 26b) de capturer les images dans un mode faible vitesse, dans lequel les intervalles de capture d'image sont relativement longs, si l'unité de jugement (52, 114) juge que l'occupant de véhicule (12) n'est pas présent.

2. Appareil de détection d'occupant de véhicule (14, 102) selon la revendication 1, dans lequel :
l'unité de jugement (52, 114) juge si l'occupant de véhicule (12) est présent ou non selon un processus d'appariement de formes sur les images (Da, Db) fournies en sortie par l'unité de capture d'image (26a, 26b), et juge que l'occupant de véhicule (12) n'est pas présent si une forme représentant l'un quelconque d'un siège vide, d'un siège enfant et d'un bagage ayant une forme prédéterminée est détectée par le processus d'appariement de formes.

3. Appareil de détection d'occupant de véhicule (14, 102) selon la revendication 1 ou 2, dans lequel :
l'unité de jugement (52, 114) juge que l'occupant de véhicule (12) n'est pas présent si l'occupant de véhicule (12) n'est pas détecté à une pluralité de moments successifs dans les images (Da, Db), qui sont fournies séquentiellement en sortie par l'unité de capture d'image (26a, 26b).

4. Appareil de détection d'occupant de véhicule (14, 102) selon l'une quelconque des revendications 1 à 3, comprenant en outre :
un dispositif de coussin gonflable (7) destiné à gonfler un coussin gonflable (AB) lorsque le véhicule entre en collision avec un obstacle ;
dans lequel la zone prédéterminée est établie de sorte que la une unité de capture d'image (26a, 26b) puisse capturer une image de tous les sièges (34) qui sont disposés dans l'habitacle du véhicule ;
l'unité de jugement (52, 114) juge si l'occupant de véhicule (12) est présent ou non sur un siège de passager avant parmi tous les sièges (34), dont les images sont capturées par l'unité de capture d'image (26a, 26b) ;
l'unité de détection d'état d'occupant de véhicule (50, 112) détecte une position d'une tête (40) de l'occupant de véhicule (12) en tant qu'état de l'occupant de véhicule (12) ; et
l'unité de commande (54, 116) commande les intervalles de capture d'image en fonction de la présence ou non de l'occupant de véhicule (12) sur le siège de passager avant, jugée par l'unité de jugement (52, 114), et commande si le coussin gonflable (AB) doit être gonflé ou non jusqu'à quel degré le coussin gonflable (AB) doit être gonflé sur la base de la position de la tête (40) qui est détectée par l'unité de détection d'état d'occupant de véhicule (50, 112).

5. Appareil de détection d'occupant de véhicule (14, 102) selon l'une quelconque des revendications 1 à 3, dans lequel :
l'unité de capture d'image (26a, 26b) est associée à chacun des sièges (34) ;
l'unité de jugement (52, 114) juge si l'occupant de véhicule (12) est présent ou non sur chacun des sièges (34) sur la base des images (Da, Db) fournies en sortie par l'unité de capture d'image (26a, 26b) ; et
l'unité de commande (54, 116) commande les intervalles de capture d'image pour chacune des unités de capture d'image (26a, 26b) sur la base de la présence ou non de l'occupant de véhicule (12) sur chacun des sièges (34), jugée par l'unité de jugement (52, 114).

6. Appareil de détection d'occupant de véhicule (14, 102) selon l'une quelconque des revendications 1 à 5, comprenant en outre :
une unité de détection d'ouverture/de fermeture de portière (106) destinée à détecter si une portière du véhicule est ouverte ou fermée ; et
une unité de détection d'attachement/de détachement de ceinture de sécurité (108) destinée à détecter si une ceinture de sécurité du siège (34) est attachée ou détachée,
dans lequel l'unité de commande (116) passe du mode faible vitesse au mode grande vitesse pour que l'unité de capture d'image (26a) capture les images si l'unité de détection d'ouverture/de fermeture de portière (106) détecte que la portière est ouverte ou fermée, ou si l'unité de détection d'attachement/de détachement de ceinture de sécurité (108) détecte que la ceinture de sécurité est attachée ou détachée, dans le mode faible vitesse.

7. Appareil de détection d'occupant de véhicule (14, 102) selon l'une quelconque des revendications 1 à 6, comprenant en outre :
une unité de détermination d'aptitude au jugement (62, 118) destinée à déterminer si l'unité de jugement (52, 114) est capable de juger la présence de l'occupant de véhicule (12),
dans lequel l'unité de commande (54, 116) commande à l'unité de capture d'image (26a, 26b) de capturer les images dans le mode grande vitesse si l'unité de détermination d'aptitude au jugement (62, 118) détermine que l'unité de jugement (52, 114) est incapable de juger la présence de l'occupant de véhicule (12).

8. Appareil de détection d'occupant de véhicule (14, 102) selon l'une quelconque des revendications 1 à 7, comprenant en outre :
une unité d'éclairage (28a, 28b, 28c, 28d) destinée à émettre de la lumière vers la zone prédéterminée,
dans lequel l'unité d'éclairage (28a, 28b, 28c, 28d) émet de la lumière en synchronisme avec les intervalles de capture d'image commandés par l'unité de commande (54, 116).

9. Appareil de détection d'occupant de véhicule (102) selon la revendication 8, comprenant en outre :
une unité de calcul (120) destinée à calculer l'un d'une luminosité des images (Da) fournies en sortie par l'unité de capture d'image (26a) et d'un éclairement dans l'habitacle du véhicule,
dans lequel l'unité de commande (116) est capable de commander au moins l'un d'un temps d'exposition de l'unité de capture d'image (26a), le fait que l'unité d'éclairage (28a, 28b, 28c, 28d) soit capable d'émettre de la lumière ou non, et d'un temps d'émission de lumière de l'unité d'éclairage (28a, 28b, 28c, 28d), et raccourcit le temps d'exposition de l'unité de capture d'image (26a), raccourcit le temps d'émission de lumière de l'unité d'éclairage (28a, 28b, 28c, 28d), ou empêche l'unité d'éclairage (28a, 28b, 28c, 28d) d'émettre de la lumière si la luminosité ou l'éclairement calculé par l'unité de calcul (120) est supérieur ou égal à une valeur prédéterminée.
